# FASCICULE DE BREVET EUROPEEN

(11) **EP 1 967 752 B1**
(45) Date de publication et mention de la délivrance du brevet: **22.12.2010**
(21) Numéro de dépôt: 08305038.5
(22) Date de dépôt: 29.02.2008
(51) Int. Cl.: F16D 25/12

(54) **Embrayage pour véhicule automobile**
Kupplung für Kraftfahrzeug
Clutch for an automobile

(30) Priorité: 06.03.2007 FR 0753670
(43) Date de publication de la demande: 10.09.2008
(73) Titulaire: PEUGEOT CITROËN AUTOMOBILES S.A., 78140 Vélizy Villacoublay (FR)
(72) Inventeur: Gerard, Fabien, 78140, VELIZY-VILLACOUBLAY (FR)

(56) Documents cités:
- EP-A2- 1 174 633
- DE-A1- 19 652 785
- FR-A1- 2 830 589
- US-A1- 2006 144 665

## Description

La présente invention concerne un embrayage pour véhicule automobile. Cette invention trouve une application particulièrement avantageuse dans les véhicules hybrides, mais elle est utilisable dans tous types de véhicules mettant en oeuvre une machine électrique.

Un embrayage de véhicule automobile est utilisé pour accoupler et désaccoupler temporairement l'arbre moteur d'un véhicule et un arbre récepteur, appelé également arbre primaire, lié à la boîte de vitesses, afin de permettre une transmission de puissance (ou couple) entre le moteur et les roues motrices du véhicule via la boîte de vitesses.

Un embrayage selon le préambule de la revendication 1 est connu de US 2006/144665 A1.

Il est intéressant, afin de connaître à tout instant l'état de fonctionnement d'un véhicule, de pouvoir détecter la position précise de l'embrayage, à savoir embrayé (fermé), débrayé (ouvert) ou intermédiaire.

A cet effet, on peut, par exemple, mesurer la position axiale d'un disque d'embrayage au cours de son fonctionnement. En effet, un tel disque, qui permet de d'accoupler le moteur aux roues motrices, vient au contact avec un plateau de pression afin de réaliser la transmission de puissance de façon progressive et mesurée entre le moteur et l'arbre primaire.

Il est connu, dans les systèmes existants, d'utiliser, pour effectuer cette mesure, un dispositif comportant:
- un capteur, dit passif, sous la forme d'une impédance permettant de mesurer la variation de la grandeur physique, cette impédance étant installée dans le carter d'embrayage et
- un circuit électronique, situé à l'extérieur du carter d'embrayage, et permettant de transformer la mesure en signal électrique exploitable par le système de contrôle du véhicule, ou tout autre système.

L'impédance est, par exemple, une résistance, une inductance, une capacité, ou une combinaison de plusieurs de ces éléments.

Cependant, ces solutions connues ne sont pas satisfaisantes dans le cas où l'embrayage est utilisé dans une chaîne de traction mettant également en oeuvre une machine électrique.

En effet, la machine électrique, lors de son fonctionnement, génère des rayonnements électromagnétiques dans son environnement. Ces rayonnements ont pour effet de perturber la communication entre le capteur passif et le circuit électronique de transformation de la mesure en signal électrique. En conséquence, la précision des informations transmises par l'élément de mesure au circuit électronique est aléatoire, et ne permet donc pas un traitement correct des informations.

La présente demande vise à remédier, au moins en partie, à cet inconvénient, en proposant un embrayage comportant un capteur qui n'est pas sensible aux perturbations extérieures, telles que des radiations électromagnétiques, ni et aux températures élevées.

Ainsi, l'invention concerne un embrayage pour véhicule automobile, disposé dans un carter d'embrayage, comportant une commande d'embrayage, et au moins un disque d'embrayage, la commande d'embrayage et le disque étant situés de part et d'autre d'une machine électrique disposée dans le carter,

L'embrayage est caractérisé en ce que qu'il comprend, dans le carter d'embrayage, un capteur générateur de tension et/ou de courant, dit capteur actif, donnant une information sur l'état de l'embrayage.

On constate que l'utilisation d'un tel dispositif est particulièrement avantageuse dans le cas des véhicules hybrides mettant en oeuvre, d'une part, un moteur thermique et, d'autre part, une machine électrique générant des perturbations électromagnétiques dans son environnement.

Au sens de la présente invention, un capteur actif est un capteur pour lequel le circuit électronique utilisé pour transformer la grandeur physique à laquelle est sensible le capteur en grandeur électrique est intégré à l'intérieur d'un même boîtier que l'élément de mesure. Ce capteur génère ainsi une tension ou un courant représentatif de la valeur de la grandeur mesurée. En règle générale, les principes physiques utilisés dans un capteur sont compris dans le groupe comprenant : la thermoélectricité, l'effet photovoltaïque, l'effet photo électromagnétique, l'induction électromagnétique, la piézoélectricité ou encore l'effet Hall.

De préférence dans l'invention décrite ici, on utilisera un capteur actif mettant en oeuvre l'effet Hall.

Dans un environnement perturbé, il est nécessaire d'isoler le capteur du reste de l'embrayage et des autres éléments du moteur du véhicule, notamment de la machine électrique.

A cet effet, dans une réalisation, le capteur actif est encapsulé dans un boîtier blindé vis-à-vis des perturbations électromagnétiques.

Par ailleurs, que le capteur soit, ou non, isolé des rayonnements électromagnétiques par un boîtier blindé, il n'est généralement pas isolé thermiquement du reste de l'embrayage. Or, la température au sein d'un carter d'embrayage de véhicule automobile en fonctionnement peut atteindre des valeurs de l'ordre de 180°C, température qui peut fortement perturber le fonctionnement du capteur.

En effet, à l'heure actuelle, les capteurs actifs ne supportent généralement pas des températures trop élevées, typiquement des températures supérieures à 140°C, puisque les composants du circuit électronique ne fonctionnement pas, ou voient leurs caractéristiques fortement dégradées, au-delà de ces températures.

En conséquence, un autre objectif de l'invention est de fournir un embrayage tel qu'il permette l'implantation d'un capteur actif dans de bonnes conditions de fonctionnement, notamment en terme de température.

A cet effet, et pour éviter tout dysfonctionnement du circuit électronique et, par là même, un dysfonctionnement de l'ensemble du capteur actif on prévoit, dans une réalisation, des moyens de refroidissement de ce capteur.

Une solution pour effectuer ce refroidissement consiste, dans une réalisation, à utiliser des moyens de refroidissement tel qu'un boîtier du type boîte à eau, de forme générale parallélépipédique, solidaire du support du capteur d'embrayage, et donc placé à proximité ou au contact direct du capteur, ce boîtier contenant un fluide de refroidissement et permettant la circulation de ce fluide de refroidissement.

Dans un mode de réalisation, le boîtier de refroidissement est fermé par une plaque horizontale située entre le volume de fluide de refroidissement circulant dans le boîtier et le capteur. Ce mode de réalisation sera ultérieurement détaillé à l'aide de figures.

Le fluide utilisé est, dans une réalisation, un fluide caloriporteur, par exemple de l'eau.

Pour alimenter en fluide ces moyens de refroidissement, et prévoir l'évacuation du fluide chauffé, il est nécessaire de prévoir un circuit de refroidissement permettant la circulation du fluide. L'installation d'un tel circuit de refroidissement spécifique pour le refroidissement du capteur pourrait s'avérer coûteux en termes de place, d'argent et de temps de fabrication.

Or, dans un véhicule hybride, il existe déjà un circuit de refroidissement permettant de diminuer la température de la machine électrique lors de son fonctionnement. Ainsi, avantageusement, on utilise le circuit de refroidissement de cette machine pour alimenter les moyens de refroidissement du capteur.

Cette alimentation est effectuée, par exemple, en réalisant un prélèvement dans le circuit de refroidissement de la machine électrique.

D'autres caractéristiques et avantages de l'invention apparaîtront avec la description de modes de réalisation, cette description étant effectuée à titre non limitatif à l'aide des figures sur lesquelles :
- la figure 1 montre une vue éclatée d'un embrayage et son carter conformes à l'état de l'art ;
- la figure 2 montre une commande d'embrayage munie de moyens de refroidissement,
- les figures 3a et 3b montrent plus en détail un mode de réalisation de moyens de refroidissement d'un capteur actif selon l'invention.

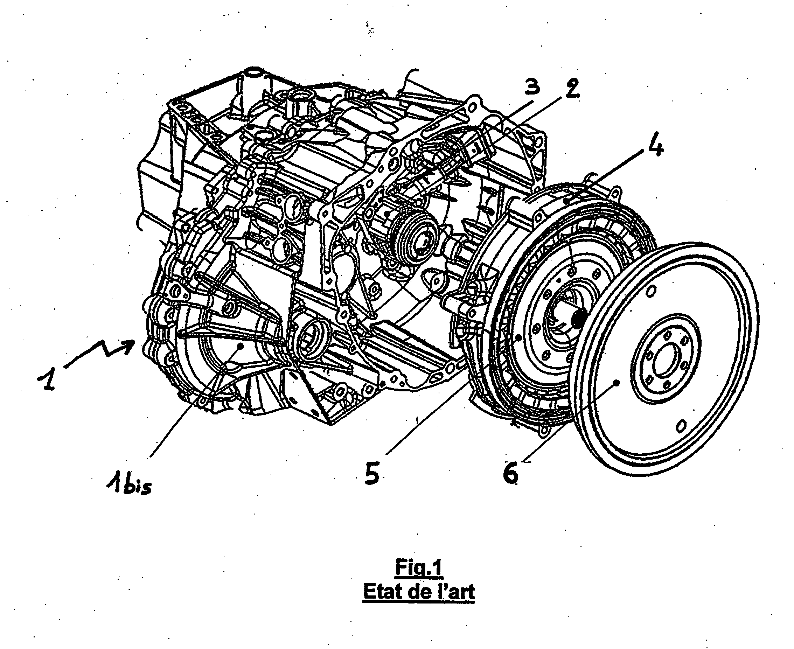

La figure 1 montre un embrayage 1 et son carter 1bis, comprenant une commande d'embrayage hydraulique 2, de type CSC (Clutch Slave Cylinder) et un capteur d'embrayage passif 3 permettant de détecter l'état ouvert ou fermé, de l'embrayage ainsi qu'un état intermédiaire de glissement de l'embrayage. Ce capteur 3 est, par exemple, une résistance ou une inductance ou encore une capacité.

Cette figure montre également une machine électrique 4, sur laquelle vient s'adosser le disque d'embrayage 5 ainsi que le volant moteur 6.

L'ensemble ainsi constitué de l'embrayage 1, du capteur passif 3, de la machine électrique 4, du disque d'embrayage 5 et du volant moteur 6 sont compris dans le carter d'embrayage 1bis.

Ainsi que mentionné précédemment, un embrayage selon l'invention comprend préférablement des moyens de refroidissement permettant de maintenir un capteur actif, utilisé pour la détection de l'état de l'embrayage, à une température permettant son fonctionnement optimal. Il peut donc être installé à l'intérieur du carter 1bis.

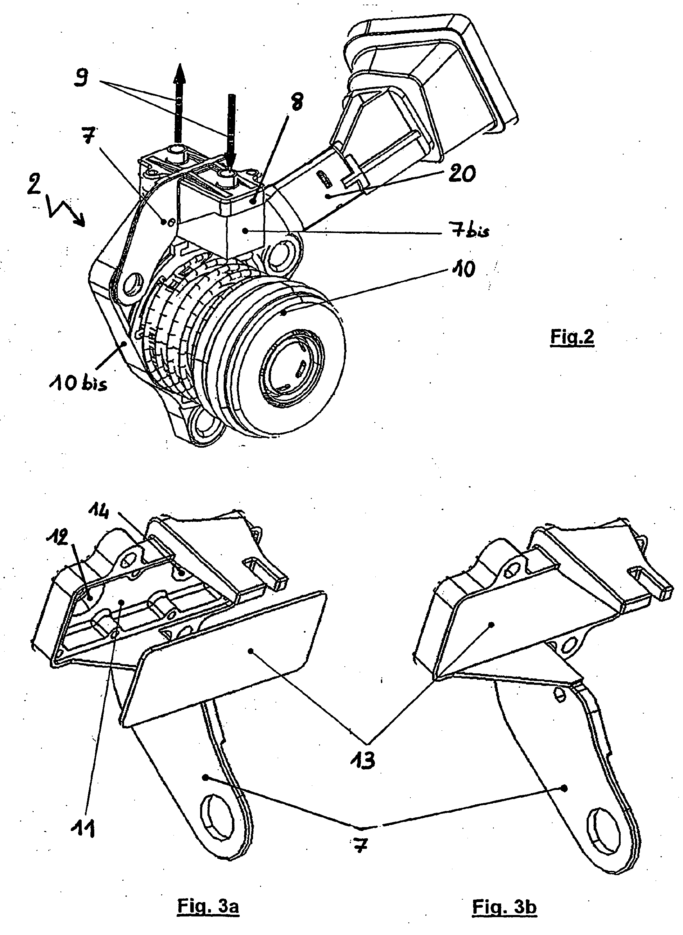

Un tel dispositif comprend une commande d'embrayage 2, qui est illustrée plus en détail à la figure 2.

Cette commande 2 comporte un corps 10bis supportant en coulissement une butée d'embrayage 10 et un moyen de raccordement 20 du corps 10bis au carter d'embrayage 1. Ce moyen de raccordement défini un bras 20 dont une extrémité est fixée au carter 1 et l'autre extrémité qui est libre, supporte le corps 10bis. Ce bras 20 assure, en plus du maintien mécanique de la butée d'embrayage 10, le passage des câbles électriques destinés à l'alimentation et au transfert des signaux issus du capteur à destination d'un organe de contrôle de l'embrayage (non représenté).

Le corps 10bis est surmonté d'un support de capteur 7. Sur le support de capteur 7 sont installés des moyens de refroidissement 8, définissant un boîtier fermé de forme générale parallélépipédique. Ces moyens de refroidissement 8, sont alimentés en fluide de refroidissement via des ajutages de section circulaires 9 situés sur le dessus du boîtier, et permettant l'entrée et la sortie du fluide.

Le capteur est installé en dessous du boîtier 8, le tout étant encapsulé par exemple, dans un seul et même boîtier protecteur 7bis.

Une variante de réalisation des moyens de refroidissement est montrée en détail sur les figures 3a et 3b.

Ces moyens de refroidissement comportent un boîtier 11, ouvert, de forme générale parallélépipédique, et destiné à recevoir le fluide de refroidissement. Ce boîtier 11 est fermé de façon étanche par une plaque horizontale 13 formant couvercle. Le fond du boîtier est percé de deux orifices 12 et 14 d'entrée et de sortie de fluide, permettant la circulation du fluide de refroidissement au travers du boîtier 11.

Le boîtier 11 est installé sur un support de capteur 7, identique à celui de la figure 2.

La plaque 13 est préférentiellement réalisée dans un matériau facilitant les échanges thermiques. Par exemple, on pourra utiliser de l'acier ou tout autre matériau conducteur.

En effet, dans l'exemple de réalisation montré sur la figure 2, le capteur devant être maintenu en dessous d'une certaine température, est situé contre les moyens de refroidissement 11, c'est-à-dire contre la plaque 13.

Cette plaque 13 est également directement en contact avec le fluide de refroidissement circulant dans le boîtier 11. Elle est donc l'unique élément de contact (interface) entre le fluide et le capteur à refroidir, ce qui implique qu'elle autorise des échanges thermiques entre ces deux éléments, afin de permettre un bon fonctionnement du dispositif de refroidissement.

## Revendications

1. Embrayage (1) pour véhicule automobile, disposé dans un carter d'embrayage (1bis) , comportant une commande d'embrayage (2) , et au moins un disque d'embrayage (5), la commande d'embrayage (2) et le disque (5) étant situés de part et d'autre d'une machine électrique (4) disposée dans le carter (1bis),
**caractérisé en ce qu'**il comprend, dans le carter d'embrayage (1bis), un capteur (7) générateur de tension et/ou de courant, dit capteur actif, donnant une information sur l'état de l'embrayage et, des moyens de refroidissement du capteur actif comprenant un boîtier, solidaire du support du capteur d'embrayage, contenant un fluide de refroidissement et permettant la circulation du fluide à travers le boîtier.

2. Embrayage selon la revendication 1, **caractérisé en ce que** le capteur actif est encapsulé dans un boîtier blindé.

3. Embrayage selon la revendication 2, **caractérisé en ce que** le boîtier est fermé par une plaque située entre le boîtier et le capteur.

4. Embrayage selon l'une des revendications 1 à 3, **caractérisé en ce que** les moyens de refroidissement sont alimentés par le circuit de refroidissement de la machine électrique.

5. Embrayage selon l'une des revendications 1 à 4, **caractérisé en ce que** le fluide de refroidissement est un fluide caloriporteur.

## Claims

1. A clutch (1) for an automobile vehicle, arranged in a clutch casing (1a), comprising a clutch linkage (2), and at least one clutch disc (5), the clutch linkage (2) and the disc (5) being situated on either side of an electrical machine (4) arranged in the casing (1a),
**characterized in that** it comprises, in the clutch casing (1a), a voltage- and/or current-generating sensor (7), designated an active sensor, providing information concerning the status of the clutch, and cooling means of the active sensor comprising a housing, integral with the support of the clutch sensor, containing a cooling fluid and permitting the circulation of the fluid through the housing.

2. The clutch according to Claim 1, **characterized in that** the active sensor is encapsulated in a shielded housing.

3. The clutch according to Claim 2, **characterized in that** the housing is closed by a plate situated between the housing and the sensor.

4. The clutch according to one of Claims 1 to 3, **characterized in that** the cooling means are supplied by the cooling circuit of the electrical machine.

5. The clutch according to one of Claims 1 to 4, **characterized in that** the cooling fluid is a heat transfer fluid.

## Patentansprüche

1. Kupplung (1) für Kraftfahrzeug, die in einem Kupplungsgehäuse (1bis) angeordnet ist, die eine Kupplungssteuerung (2) und mindestens eine Kupplungsscheibe (5) aufweist, wobei sich die Kupplungssteuerung (2) und die Scheibe (5) jeweils auf einer Seite einer Elektromaschine (4), die in dem Gehäuse (1bis) angeordnet ist, befinden,
**dadurch gekennzeichnet, dass** sie in dem Kupplungsgehäuse (1bis) einen Sensor (7) aufweist, der eine Spannung und/oder einem Strom erzeugt, aktiver Sensor genannt, der eine Information über den Zustand der Kupplung gibt, und Mittel zum Kühlen des aktiven Sensors, die ein Gehäuse aufweisen, das fest mit dem Träger des Kupplungssensors verbunden ist, das eine Kühlflüssigkeit enthält und das Zirkulieren des Fluids durch das Gehäuse erlaubt.

2. Kupplung nach Anspruch 1, **dadurch gekennzeichnet, dass** der aktive Sensor in ein geschirmtes Gehäuse gekapselt ist.

3. Kupplung nach Anspruch 2, **dadurch gekennzeichnet, dass** das Gehäuse von einer Platte verschlossen ist, die sich zwischen dem Gehäuse und dem Sensor befindet.

4. Kupplung nach einem der Ansprüche 1 bis 3, **dadurch gekennzeichnet, dass** die Kühlmittel von dem Kühlkreislauf der Elektromaschine zugeführt werden.

5. Kupplung nach einem der Ansprüche 1 bis 4, **dadurch gekennzeichnet, dass** das Kühlmittel ein Wärmeübertragungsfluid ist.
